# EUROPÄISCHE PATENTSCHRIFT

(11) **EP 2 880 084 B1**
(45) Veröffentlichungstag und Bekanntmachung des Hinweises auf die Patenterteilung: **17.07.2019**
(21) Anmeldenummer: 13740274.9
(22) Anmeldetag: 23.07.2013
(51) Int. Cl.: C08J 5/12, B32B 7/12, B32B 37/04, B32B 27/32, B32B 27/36, B32B 27/12

(54) **VERFAHREN ZUM VERKLEBEN MIT DÜNNEN KLEBSTOFFSCHICHTEN**
ADHESION METHOD USING THIN ADHESIVE LAYERS
PROCÉDÉ POUR COLLER AVEC DES COUCHES DE COLLE MINCES

(30) Priorität: 31.07.2012 DE 102012213397
(43) Veröffentlichungstag der Anmeldung: 10.06.2015
(60) Teilanmeldung: 17209269.4
(73) Patentinhaber: Henkel AG & Co. KGaA, 40589 Düsseldorf (DE)
(72) Erfinder: KINZELMANN, Hans-Georg, 50259 Pulheim (DE); GIERLINGS, Michael, 40723 Hilden (DE)
(86) Internationale Anmeldenummer: PCT/EP2013/065492
(87) Internationale Veröffentlichungsnummer: WO 2014/019891

(56) Entgegenhaltungen:
- WO-A1-97/03821
- WO-A1-2011/045833
- DE-T2- 69 736 063
- US-A- 5 250 610

## Beschreibung

Die Erfindung betrifft ein Verfahren zum Verkleben von flexiblen Substraten, wobei die verbindende Klebstoffschicht dünn ausgebildet ist. Die Erfindung betrifft weiterhin ein Verbundsubstrat, wobei die beiden Substrate durch eine flexible, dünne Klebstoffschicht verbunden sind.

Die DE 10 2005 028 661 beschreibt ein Verfahren, bei dem Zweischichtfolien aus thermoplastischen Materialien kontinuierlich hergestellt werden können. Es handelt sich dabei um eine stärkere Folie und eine dünnere zweite Folie aus gleichem Material. Dabei werden beide Folien in einem vorgegebenen Verhältnis erwärmt, so dass die Oberflächen erweicht und angeschmolzen werden. Diese werden dann unmittelbar danach miteinander verbunden. Die Verwendung eines Klebstoffes zum Verbinden der Materialien wird nicht beschrieben.

Die EP 1 465 959 beschreibt ein Verfahren zum Kaschieren von Folien auf Formkörper, wobei ein reaktiver PU-Schmelzklebstoff auf die Folienoberfläche aufgetragen wird. Die Folie wird danach unter Erwärmen aktiviert und mit dem Formkörper verklebt.

Die EP 0 659 829 beschreibt ein Verbinden von Kaschierfolien mit einem Trägersubstrat, wobei eine Mehrschichtfolie durch Kaschieren und Prägen aus zwei verschiedenen Folienschichten unter Erwärmen durch Kalanderwalzen hergestellt wird. Diese Zweischichtdekorfolien werden mittels eines kalthärtenden Klebstoffes auf ein Kunststoffprofil aufkaschiert.

Die DE 44 19 414 A1 beschreibt ein Verfahren zur Herstellung von Papieren mit einer Kunststofffolie, wobei die Kunstofffolie zunächst mit einem Kaschiermittel versehen wird und das Papier, beispielsweise in einem Walzenlaminator unter Druck, im Anschluss gegen die Kunstofffolie kaschiert wird. Die Kunstofffolie kann unter anderem aus Polypropylen oder Polyester, also thermoplastischen Materialien, bestehen. Gemäß den Ausführungsbeispielen wird das Kaschiermittel in Mengen zwischen 3 und 8 g/m² aufgetragen. Dabei können z.B. wässrige Dispersionskleber, Harze oder Hotmelts, lösungsmittelhaltige oder lösungsmittelfreie Kleber in Form von Ein- oder Zweikomponentenklebern verwendet werden. Kommt als Kaschiermittel eine wässrige Dispersion zum Einsatz, wird durch eine Wärmebehandlung eine ausreichende Menge des im Papier befindlichen Wassers verdampft. Diese Wärmebehandlung findet nach dem Kaschieren statt und dient nicht dem Erweichen der Kunststofffolie unmittelbar vor, während oder nach dem Verkleben. Ein Verfahren, bei dem der Klebstoff zunächst auf das Papier aufgetragen und im Anschluss mit einem erwärmten thermoplastischen Kunststoff zusammengeführt wird, wird nicht beschrieben.

Die DE 10 2005 023 280 A1 beschreibt eine Haftfolie zum lösbaren Halten von Gegenständen. Die Haftfolie umfasst zwei polymerbasierte Folienschichten die mit einem Polymerklebstoff verbunden sein können. Die Folien können dabei aus thermoplastischem Material sein. Es sind allerdings nur Polymerfolien mit speziellen aufeinander abgestimmten Eigenschaften geeignet. Zu diesen Eigenschaften zählen beispielsweise unterschiedliche Dehnbarkeiten, unterschiedliche Peelfähigkeiten, Siegel- bzw. Nichtsiegelfähigkeit und unterschiedliche Vicat-Erweichungstemperaturen. Die Schichtdicke der Polymerklebstoffschicht beträgt vorzugsweise 0,5-5 µm, insbesondere 1-3 µm. Das Herstellverfahren der Laminate wird nicht beschrieben.

Die DE 10 2009 045 395 A1 beschreibt doppelseitige Haftklebebänder, aus einer mit einer Klebmasse beschichteten Trägerschicht. Bei der Trägerschicht handelt es sich um ein Laminat, das aus mindestens zwei durch eine Laminatklebstoffschicht miteinander verbundenen Folienschichten aufgebaut ist. Die Folienschichten bestehen aus extrudierbaren oder gießbaren Polymeren. Sie können zur besseren chemischen Verankerung physikalisch und/oder chemisch vorbehandelt sein, beispielsweise durch eine Corona-, Plasma- oder Flammbehandlung als auch durch Ätzen, durch Behandlung mit chemischen Primern oder UV-Photoinitiatoren. Die Schichtdicke des Laminatklebstoffs soll mindestens 2 µm (ca. 2 g/m²), besser mindestens 3 µm (ca. 3 g/m²) betragen, kann aber auch deutlich größer sein, und zwar mehr als 10 µm (ca. 10 g/m²), mehr als 50 µm (ca. 50 g/m²) oder sogar mehr als 100 µm (ca. 100 g/m²). In den Ausführungsbeispielen werden Trägerschichten beschrieben, die jeweils aus zwei Corona-vorbehandelten PET-Folien bestehen, die mit mindestens 5 g/m² eines UV-härtbaren Laminatklebstoffs miteinander verbunden werden. Zur Herstellung der Trägerschicht, wird dazu eine der beiden Folien über eine Rakel mit dem Klebstoff beschichtet, gegen die andere Folie kaschiert und die Folien unter UV-Strahlung miteinander verklebt. Eine Wärmebehandlung zum Erweichen der Kunstofffolie unmittelbar vor, während oder nach dem Verkleben wird nicht beschrieben.

EP 2 489 760 A1 offenbart ein Verfahren zur Herstellung von Stahlblechen, die mit einer thermoplastischen Folie bedeckt sind. Das Stahlblech wird mit einem Silanvernetzenden Klebstoff in einer Menge von 0,5 bis 30 mg/m² beschichtet und anschließend wird eine thermoplastische Folie auf die oberflächenbehandelte Seite eines Stahlblechs aufgebracht und unter Druck und Erwärmung auf die Erweichungstemperatur der thermoplastischen Folie laminiert.

US 5 250 610 A offenbart einen lackierten Karton, der gegen eine biaxial orientierte Polypropylenfolie unter Verwendung eines Klebstoffs mit einer Auftragsmenge unter 2 g/m² laminiert wird. Die Verbundhaftung der verklebten Proben beträgt 2,3 bis 3,5 N/15 min.

WO 97/03821 A1 offenbart ein Laminat, in dem ein Polyurethankleber in einer Menge von 1,5 g/m² auf eine Polyesterfolie aufgetragen und auf Folien aus LDPE laminiert wird.

DE 697 36 063 T2 offenbart ein mit Polyethylenterephthalatharzfolie beschichtetes Metallblech, erhältlich durch ein Beschichtungsverfahren bestehend aus i) Erwärmen eines Metallbands, das kontinuierlich durch eine Vorrichtung zugeführt wird, auf einen Temperaturbereich über der Schmelztemperatur des Polyethylenterephthalatharzes mittels einer Heizvorrichtung, ii) Kontaktieren einer biaxial orientierten Folie aus Polyethylenterephthalatharz, die durch eine Vorrichtung zugeführt wird, an einer Seite oder beiden Seiten des Metallbands, iii) Zusammenbringen derselben zwischen einem Laminierungswalzenpaar, Drücken und Pressen derselben, und Abschrecken unmittelbar danach.

Verfahren zum Herstellen von Folien, die ohne Klebstoffschicht miteinander verbunden werden, sind bekannt. Dabei sind eine spezielle Auswahl der Folienmaterialien und ein entsprechend abgestimmter Verfahrensprozess notwendig. Um eine entsprechende Verklebung zu erzielen, müssen die Oberflächen und die Materialien der zu verbindenden Substrate aufeinander abgestimmt werden. Weiterhin ist es bekannt, flexible Foliensubstrate auf feste Kunststoff- oder Metallsubstrate aufzubringen. Das kann durch einen Klebstoff geschehen, es ist jedoch in diesem Falle üblich, dass eine ausreichend dicke Klebstoffschicht aufgebracht wird.

Werden Substrate mit einer rauhen Oberfläche eingesetzt, ist es notwendig, dass eine Klebstoffmenge eingebracht wird, die die Oberfläche vollständig bedeckt. Nur unter dieser Vorraussetzung ist eine vollflächige Verklebung möglich. Damit soll eine Delaminierung durch Wasser, durch die Witterung oder andere Einflüsse vermieden werden. Fehlstellen sind dabei häufig durch Blasen zu erkennen. Solche optischen Mängel sind unerwünscht. Es ist bekannt, dass deswegen eine erhöhte Menge an Klebstoff aufgebracht werden muss.

Werden flexible Substrate verklebt, ist es bekannt, dass die Klebstoffschicht einerseits eine vollflächige Verklebung sicherstellen soll. Auf der anderen Seite darf diese Schicht aber nicht zu dick sein, damit eine Flexibilität des verklebten Verbundsubstrates gegeben ist. Das kann dann zu Rissen und Delaminierung in dem Klebstoffverbund führen. Weiterhin soll die Klebstoffschicht für viele Zwecke nicht zwischen den Foliensubstraten erkennbar sein.

Aufgabe der vorliegenden Erfindung ist es deswegen, ein Verfahren zur Verfügung zu stellen, bei dem Folien auf unterschiedliche Substrate, beispielsweise feste Substrate oder flexible Substrate verklebt werden können. Dabei soll nur eine geringe Klebstoffmenge aufgetragen werden. Weiterhin soll eine vollflächige Verklebung sichergestellt werden. Ein weiterer Aspekt des vorliegenden Verfahrens liegt darin, dass durch die Verfahrensführung eine schnelle Verklebung erreicht wird, wobei die Weiterverarbeitung der erhaltenen Verbundsubstrate beschleunigt wird.

Die Aufgabe wird gelöst durch ein Verfahren zum Verkleben von zwei Substraten, wobei auf einem Substrat ein Klebstoff mit einem Schichtgewicht unter 2 g/m² aufgetragen wird, dieses Substrat mit dem zweiten folienförmigen Substrat aus einem thermoplastischen Kunststoff zusammengeführt wird, wobei die Oberfläche des zweiten Substrats durch Erwärmen in einen erweichten Zustand überführt wird und die Substrate unmittelbar nach dem Erwärmen durch Druck miteinander verklebt werden, wobei es sich bei dem Klebstoff um einen Klebstoff auf Basis von thermoplastischen Polyurethanen, EVA oder Polyacrylaten handelt.

Als Substrate für das erfindungsgemäße Verfahren kann eine Vielzahl von verschiedenen Materialien eingesetzt werden. Es kann sich um feste Materialien handeln, beispielsweise Holzwerkstoffe, Metalle, beispielsweise Aluminium, Eisen oder Zink, duroplastische oder thermoplastische Kunststoffe, wie Polyvinylchlorid (PVC), Polypropylen (PP), Polystyrol (PS), Acrylnitril-Butadien-Styrol-Copolymeren (ABS), Polyester oder Polyamide, organische Polymere, wie Cellophan; Papier, Karton oder andere Werkstoffe, es können aber auch flexible folienförmige Materialien als erstes Substrat eingesetzt werden. Es können Mehrschichtsubstrate ausgewählt werden, die Oberfläche kann beschichtet, beispielsweise durch Metall-, Oxid- oder Kunststoffbeschichtungen, bedruckt, eingefärbt oder chemisch modifiziert sein. Solche Materialien sind beispielsweise als erstes Substrat geeignet. Es können aber auch Substrate aus den Materialien ausgewählt werden, die als zweites Substrat geeignet sind.

Als zweites Substrat sind flexible Folienmaterialien geeignet, wie solche aus thermoplastischen Kunststoffen in Folienform, beispielsweise Polyolefine, wie Polyethylen (LDPE, LLDPE, metallocen-katalysiertes PE, HDPE) oder Polypropylen (PP, CPP, OPP); Polyvinylchlorid (PVC); Ethylencopolymere, wie Ethylenvinylacetat (EVA), Ethylenacrylatcopolymere (EMA), EMMA, EAA; Polyestern; PLA, Polyamid oder lonomere, wie Ethylen/Acrylsäure-Copolymerisate. Dabei können die Folienmaterialen auch modifiziert sein, z. B. durch Modifizieren der Kunststoffoberfläche mit funktionellen Gruppen, oder es können zusätzliche Komponenten, beispielsweise Pigmente, Farbstoffe in den Folien enthalten sein. Diese thermoplastischen Kunststoffe sollen einen Erweichungspunkt (gemessen mit DSC) unter 200 °C aufweisen, insbesondere unter 150 °C. Auch als zweites Substrat sind Verbundsubstrate möglich, solange die zu verklebende Oberfläche thermoplastisch beschichtet ist. Es kann sich insgesamt um gefärbte, farblose oder transparente Folien handeln. Insbesondere sind als Polymere Polyolefine und andere Ethylencopolymere geeignet. Unter flexiblen Folien sollen die üblichen dünnen, bahnenförmigen Substrate verstanden werden, die beispielsweise als Verpackungsfolie, Dekorfolie, Band oder in ähnlichen Formen bekannt sind.

Der Erweichungspunkt ist der gemäß der Norm DIN EN ISO 11357-3:2011 bei einer Aufheizrate von 10 K/min bestimmbare Schmelzpunkt (Schmelzpeaktemperatur Tₚₘ).

Eine Vorbehandlung der Oberfläche der Substrate kann durchgeführt werden. Dabei können die Kunststoffoberflächen gereinigt werden und sie können gegebenenfalls vor dem Verkleben noch einer physikalischen, chemischen oder elektrochemischen Vorbehandlung unterworfen werden.

Gemäß der erfinderischen Verfahrensweise wird auf ein erstes Substrat ein Klebstoff aufgetragen. Der Klebstoff kann durch die bekannten Verfahrensweisen aufgetragen werden, beispielsweise Sprühen, Rakeln, Walzenapplikation, Drucken oder andere bekannte Verfahren. Erfindungsgemäß soll der Klebstoff mit geringer Schichtdicke aufgetragen werden. Es kann sich bei diesem Substrat um ein festes Substrat handeln, es kann sich ebenso um ein folienförmiges, flexibles Substrat handeln. Der aufzutragende Klebstoff kann den Erfordernissen der Verklebung angepasst werden. Werden wässrige Klebstoffe eingesetzt, ist es zweckmäßig, wenn das Wasser von der Oberfläche abgeführt wird. Werden lösemittelhaltige Klebstoffe ausgewählt, muss die Oberfläche stabil gegen das enthaltene Lösemittel sein. Werden Heißschmelzklebstoffe ausgewählt, soll die Oberfläche durch den möglichen Wärmeeintrag nicht beeinträchtigt werden. Reaktive Klebstoffe können gegebenenfalls eine verbesserte Haftung zu dem Substrat ergeben. Werden strahlenvernetzende Klebstoffe eingesetzt, kann bevorzugt vor dem Zusammenfügen der Substrate eine Bestrahlung der Klebstoffschicht erfolgen, um eine Vernetzung zu erhalten.

Die Verfahrensführung kann in Anpassung an den Klebstoff falls nötig entsprechende Maßnahmen einschließen, wie Trockenzonen, Erwärmungszonen oder andere unterstützende Maßnahmen. Nach dem Auftragen eines geeigneten Klebstoffs auf das erste Substrat wird das zweite Substrat mit dem ersten Substrat zusammengeführt und verklebt.

Erfindungsgemäß ist es notwendig, dass unmittelbar vor oder bei oder nach dem Verkleben der Substrate das zweite Substrat an der zu verklebenden Oberfläche erwärmt wird. Dabei soll die Erwärmung bevorzugt so durchgeführt werden, dass nur die Oberfläche erwärmt wird, die mechanischen Eigenschaften des zweiten Substrats sollen möglichst nicht nachteilig beeinflusst werden. Das Erwärmen kann direkt an der zu verklebenden Oberfläche erfolgen, es ist jedoch auch möglich, berührungslose Erwärmungsverfahren einzusetzen.

Verfahren zum Erwärmen von Substraten sind bekannt. Das kann beispielsweise durch Erwärmen mit heißen Gegenständen geschehen, beispielsweise kann eine heiße Walze über das Substrat geführt werden. Eine andere Ausführungsform erwärmt die Oberfläche durch Überleiten von heißen Gasen, sie kann beflämmt werden, es kann eine Plasmabehandlung durchgeführt werden. Eine weitere Ausführungsform setzt elektromagnetische Strahlung ein, im Radiofrequenzbereich, im Bereich der Mikrowellenstrahlung, insbesondere IR-Strahlung oder NIR-Strahlung. Eine weitere Ausführungsform setzt eine Erwärmung durch Ultraschall ein. Dem Fachmann sind Vorrichtungen zum Erwärmen einer Oberfläche im Prinzip bekannt.

Es ist zweckmäßig, wenn das Erwärmen schnell geschieht und nur der Bereich der zu verklebenden Oberfläche erwärmt wird. So kann sichergestellt werden, dass die mechanischen Eigenschaften des zweiten Substrats nur wenig oder nicht beeinträchtigt werden. Es ist außerdem auch möglich, auf der Rückseite des zweiten Substrats eine Unterstützung zur Beibehaltung der Form vorzusehen. Nach der vorliegenden Erfindung werden beide Substrate unmittelbar nach dem Erwärmen zusammengeführt und verklebt. Damit die Oberfläche des zweiten Substrats nach dem Erwärmen nicht zu stark abkühlt bevor die Substrate verklebt werden, sollten die Substrate bevorzugt nach weniger als 10 s, weiter bevorzugt nach weniger als 1 s, insbesondere nach weniger als 0,1 s nach dem Erwärmen des zweiten Substrats zusammengeführt werden.
Insbesondere für den Fall der Erwärmung durch Ultraschall ist es zweckmäßig, dass zuerst die beiden Substrate zusammengeführt werden und anschließend durch das Foliensubstrat eine Erwärmung der verklebten Oberfläche durchgeführt wird. Die Erwärmung geschieht in diesem Fall nachdem die Substrate zusammengeführt wurden und zwar solange der Klebstoff noch nicht ausgehärtet ist. Die maximal zur Verfügung stehende Zeit hängt vom verwendeten Klebstoff ab. Bevorzugt findet die Erwärmung aber innerhalb von 1 h, weiter bevorzugt innerhalb von 10 min, insbesondere innerhalb von 1 s nach dem Zusammenführen der beiden Substrate statt.

Die Erwärmung soll an der Oberfläche auf eine Temperatur geschehen, die bevorzugt ungefähr der Erweichungstemperatur des thermoplastischen Substrates entspricht. Beispielsweise soll die Oberfläche des zweiten Substrates bevorzugt auf eine Temperatur von + / - 40 °C der Erweichungstemperatur (Erweichungstemperatur gemessen mit DSC) des Polymeren an der Oberfläche erwärmt werden, insbesondere bevorzugt +/- 20°C. Bei diesen Temperaturen wird die Oberfläche des Substrates weich und gegebenenfalls unter Druck verformbar oder fließfähig. Es ist dem Fachmann bekannt, dass Polymere einen engen Erweichungspunkt, beispielsweise einem Schmelzpunkt, aufweisen können, es kann aber auch ein Erweichungsbereich vorliegen, in dem sich das Material in einem erweichten Zustand befindet.

In einer bevorzugten Ausführungsform soll das erste Substrat bei der Erwärmungstemperatur keine thermoplastische Oberfläche aufweisen. Die Oberfläche des ersten Substrats soll bei der Erwärmungstemperatur also nicht erweicht sein. Dies ist der Fall, wenn als erstes Substrat entweder ein nicht thermoplastisches Substrat gewählt oder aber ein thermoplastisches Substrat mit einer ausreichend hohen Erweichungstemperatur verwendet wird.

Unbeschadet einer Theorie wird angenommen, dass die Oberflächenrauhigkeit der Substratoberfläche durch das Erwärmen und Verpressen mit der klebstoffbehafteten ersten Oberfläche vermindert wird. Dadurch ist eine besonders geringe Schichtdicke des aufgetragenen Klebstoffes zwischen den Substraten möglich. Es kann angenommen werden, dass die Oberfläche geglättet wird, damit wird weniger Klebstoff zu der Verklebung benötigt.

Die Menge des aufgetragenen Klebstoffs soll unter 2 g/m² betragen, bevorzugt unter 1 g/m², insbesondere unter 0,5 g/m². Die Menge des aufgetragenen Klebstoffs beträgt dabei für jeden dieser drei genannten Bereiche bevorzugt mehr als 0,05 g/m², insbesondere 0,2 g/m² und mehr. Die optimale Auftragsmenge wird dabei entsprechend der Oberflächenrauhigkeit bzw. Unebenheit des Substrats gewählt. Unebenheiten können beispielsweise durch Bedrucken des Substrats entstehen und hängen vom Druckmuster als auch von der Auftragsmenge der Druckfarbe ab. Durch die Verklebung unter Druck wird trotz der geringen Klebstoffmenge eine flächige Verklebung erzielt.

Es können die üblichen Vorrichtungen zum Zusammenführen und Verkleben angewendet werden. Beispielsweise können Stempel, Rollen, Walzen, Platten zum Zusammenführen der Substrate eingesetzt werden, insbesondere durch Pressen oder Walzen der Substrate gegeneinander. Der Druck auf die Substrate, dargestellt bei einer Zusammenführung durch Walzen, kann beispielsweise zwischen 0,2 bis 15 bar erfolgen. In der besonderen Ausführungsform zum Verkleben von zwei Foliensubstraten sind solche Kaschiervorrichtungen dem Fachmann allgemein bekannt.

Durch das Zusammenführen mit der erwärmten Oberfläche kann auch die dünne Schicht des Klebstoffs erwärmt werden. Das kann zu einem schnelleren Haftungsaufbau und zu einer schnelleren Vernetzung führen.

Für das erfindungsgemäße Verfahren soll ein geeigneter Klebstoff aus flüssig auftragbaren Klebstoffen ausgewählt werden. Es kann sich um wässrige Dispersionen, lösemittelhaltige nicht reaktive oder reaktive Klebstoffe handeln, es können lösemittelfreie flüssige oder feste schmelzbare Klebstoffe eingesetzt werden. Es kann sich um 1-Komponentensysteme oder um 2-Komponentensystem handeln.

Nach der vorliegenden Erfindung ist der Klebstoff ein Klebstoff auf Basis von thermoplastischen Polyurethanen, EVA, Polyacrylaten; lösemittelhaltigen Klebstoffen, wie Acrylatklebstoffe, 1K- oder 2K-Polyurethanklebstoffe; reaktiven Schmelzklebstoffen, wie 1K-PU-Klebstoffe; oder lösemittelfreien 1K- oder 2K-PU-Klebstoffen.

Erfindungsgemäß ist es zweckmäßig, wenn der Klebstoff eine niedrige Viskosität aufweist. Die Viskosität eines geeigneten Klebstoffs beim Auftragen beträgt beispielsweise bis 10000 mPas, bevorzugt bis 5000 mPas (gemessen mit einem Brookfield-Viskosimeter; ISO 2555:2000). Die Messtemperatur wird der Auftragstemperatur angepasst. Für bei Raumtemperatur flüssige Klebstoffe wird die Viskosität beispielsweise bei 20 bis 40°C bestimmt, bei Schmelzklebstoffen kann die Messtemperatur bei 100 bis 150°C liegen. Bei höher viskosen Klebstoffen kann beispielsweise auch von 40 bis 100°C gemessen werden. Wässrige oder lösemittelhaltige Klebstoffe besitzen häufig eine niedrige Viskosität bis 500 mPas, Schmelzklebstoffe häufig eine Viskosität über 1000 mPas.

Nach dem erfindungsgemäßen Verfahren können Verklebungen auf einem weiten Anwendungsgebiet durchgeführt werden. Werden feste Substrate mit folienförmigen Substraten verklebt, wird auf das gegebenenfalls vorbehandelte feste Substrat der Klebstoff aufgetragen. Auf die so beschichtete Oberfläche wird als zweites Substrat eine Folie mit einer Oberfläche aus thermoplastischen Polymeren aufgebracht. Durch die Erwärmung der Oberfläche der thermoplastischen Folie, wird diese an der Oberfläche aufgeweicht. Unter Anwendung von Druck beim Verkleben kann sichergestellt werden, dass eine besonders glatte Oberfläche des zu verklebenden thermoplastischen Substrates erhalten wird. Es werden Blasen und Delaminierungen nicht beobachtet. Eine andere Ausführungsweise arbeitet mit einem flexiblen ersten Substrat, auf dem ein Klebstoff in dünner Schicht aufgetragen wird. Auf diese Oberfläche wird dann ebenfalls unter Druck ein zweites Foliensubstrat aufgebracht, das eine Schicht aus thermoplastischen Polymeren an der Oberfläche aufweisen soll. Durch Erwärmen und Zusammenfügen mit dem ersten Substrat wird auch hier sichergestellt, dass eine besonders glatte Oberfläche des zweiten Substrates erhalten wird.

Das Zusammenfügen kann beispielsweise durch Druck unterstützt werden. Dieser kann beispielsweise von 0,2 bis 16 bar ausgeübt auf Anpresswalzen betragen. Erfindungsgemäß ist es möglich, mit dünnen Auftragsgewichten von Klebstoffen eine vollflächige Verklebung der Substrate zu erzielen.

Das durch das Verfahren der vorliegenden Erfindung erhaltene Verbundsubstrat besteht aus einem ersten Substrat, einem zweiten Substrat mit einer Oberfläche aus thermoplastischen Polymeren sowie einer dazwischen befindliche Klebstoffschicht, wobei diese Klebstoffschicht bevorzugt eine Stärke von 0,05 bis 2 µm aufweisen soll.
Die Schichtstärke kann durch das Auftragsgewicht des Klebstoffes auf die Fläche bestimmt werden, beispielsweise von 0,05 bis 2 g/m². Dabei kann das erste Substrat ein starres oder festes Substrat sein, beispielsweise ein Formkörper aus unterschiedlichen Materialien. Diese sollen nur eine geringe Oberflächenrauhigkeit aufweisen. Als weitere Ausführungsform kann das erste Substrat aus einem flexiblen Substrat bestehen, dabei sind Material und Eigenschaften dieses flexiblen Substrates in weiten Grenzen variierbar. Es kann sich auch um ein gleiches Material wie das zweite Substrat handeln, insbesondere sind beide Substrate jedoch unterschiedlich. Das erste Substrat kann ggf. auch bearbeitet oder bedruckt sein. Durch den Auftrag einer dünnen Klebstoffschicht wird die Oberfläche des ersten Substrates nicht beeinflusst. Ein möglicher Gehalt an Wasser, an organischen Lösemitteln oder der geringe Gehalt an Wärme des aufgetragenen Klebstoffes ist so ausgewählt, dass die Eigenschaften der Oberfläche des ersten Substrates im Wesentlichen nicht beeinträchtigt werden.

Als zweites Substrat des Verbundgegenstandes wird ein Substrat ausgewählt, das mindestens auf der zu verklebenden Oberfläche aus thermoplastischen Polymeren besteht. Es kann sich um eine Einschichtfolie handeln, es können aber auch Mehrschichtfolien ausgewählt werden. Das Verbundsubstrat wird durch Zusammenfügen und Verpressen der beiden unterschiedlichen Substrate erhalten.

Die Verbundsubstrate weisen eine hohe Festigkeit der verklebten Einzelsubstrate auf. Durch die geringe Schichtdicke der Klebstoffschicht wird eine hohe Kohäsion des Klebstoffes sichergestellt. Weiterhin ist durch die geringe Schichtdicke des Substrates eine verbesserte Flexibilität der Klebstoffschicht gegeben. Deswegen können die Verbundsubstrate eine hohe Stabilität gegen elastische Verformungen aufweisen.

Ein weiterer Vorteil des erfindungsgemäßen Verfahrens und der damit hergestellten Verbundkörper ist in der geringen optischen Veränderung der Oberflächen zu sehen. Durch eine geringe Klebstoffschicht ist diese optisch farblos. Die optischen Eigenschaften des Verbundgegenstandes werden verbessert oder bleiben erhalten.

Ein weiterer Vorteil des erfindungsgemäßen Verfahrens liegt in den geringeren Belastungen bei dem Herstellungsprozess. Durch den geringen Gehalt an Lösemitteln, Wasser oder durch den geringen Wärmegehalt eines erfindungsgemäß geeigneten Klebstoffes, werden die Eigenschaften der unterschiedlichen Substrate nicht beeinträchtigt. Beispielsweise sind geringe Wassermengen für Papiersubstrate vorteilhaft. Geringe Lösemittelmengen sind unabhängig von der Arbeitshygiene auch für Substrate zweckmäßig, die ggf. gegen Lösemittel empfindlich sind. Durch die geringe Schichtdicke wird auch die Oberfläche des ersten Substrates beim Auftragen eines Schmelz-Klebstoffes thermisch nur wenig beansprucht. Weiterhin ist auch durch die kurzzeitige Erwärmung des zweiten Substrats eine Belastung des ersten Substrats nicht gegeben.

Das erfindungsgemäße Verfahren stellt also ein Verfahren zum Verkleben von Mehrschichtverbundkörpern zur Verfügung, bei dem nur ein geringer Klebstoffeinsatz erforderlich ist. Weiterhin werden verbesserte verklebte Substrate erhalten.

### Beispiele:

### Klebstoff 1 (NCO-terminiertes Polyesterurethan):

Ein Polyesterpolyol aus aromatischen und aliphatischen Dicarbonsäuren und Polyalkylendiolen wird umgesetzt mit 4,4'-MDI im Überschuss.
Der Klebstoff hat einen NCO-Gehalt von 3,4 Gew.-% NCO bezogen auf den Festkörper.
Festkörper: 50 Gew.-% in Ethylacetat bezogen auf Klebstoff 1
Viskosität: 140 mPas (Brookfield LVT, bei 20°C, Spindel 2, Scherrate von 30 UpM, ISO 2555)

### Klebstoff 2:

Ein Polyesterprepolymer wird hergestellt nach der Vorschrift gemäß Beispiel 1. Der Klebstoff hat einen NCO-Gehalt von 4,0 Gew.-% NCO bezogen auf den Festkörper.
Festkörper: 60 Gew.-% in Ethylacetat bezogen auf Klebstoff 2
Viskosität: 300 mPas (Brookfield LVT, bei 20°C, Spindel 2, Scherrate von 30 UpM, ISO 2555)
Substrat 1: PET-Folie 12 µm.
Substrat 2: LLDPE-Folie 60 µm (Schmelzpunkt 114°C, DSC nach DIN EN ISO 11357-3:2011/Aufheizrate 10 K/min).

### Verfahren zur Verklebung:

Verfahren 1: Auftrag der Klebstoffe mit einer Rakel auf das Substrat 1.
   Erwärmen des Substrats 2 mit einem IR-Strahler (1,5 bis 1,8 µm Wellenlänge, 10 cm Abstand).
   Verklebung der Substrate unmittelbar danach von Hand.
Verfahren 2: Maschineller Auftrag eines verdünnten Klebstoffs (ca. 10 Gew.-% Festkörperanteil) auf das Substrat 1 mit einer Rasterwalze bei einer Bahngeschwindigkeit von 10 m/min.
   Entfernen der Lösemittel in einem Drei-Zonen-Trockner.
   Verklebung mit einem Kaschierwerk bei 60°C.
   Ultraschallbehandlung (20 kHz) des Verbundes in 5 mm Abstand zu Substrat 1.
Verfahren 3: Maschineller Auftrag eines verdünnten Klebstoffs (ca. 10 Gew.-% Festkörperanteil) auf das Substrat 1 mit einer Rasterwalze bei einer Bahngeschwindigkeit von 60 m/min.
   Entfernen der Lösemittel in einem Drei-Zonen-Trockner.
   Erwärmen der Substrate 2 mit einem IR-Strahler (siehe oben), 40 kW über eine Strecke von 1 m entlang der Laufrichtung.
   Verklebung mit einem Kaschierwerk bei 60°C.

Bestimmung des Auftragsgewichts durch Wägung von mit Lösemittel gereinigten Folien und verklebten Folien.

Verbundhaftung (Peeltest an 15 mm breiten Streifen, 100 mm/min) gemessen nach DIN 53278, 2 x 90°.

Siegelnahthaftung (Peeltest an 15 mm breiten Streifen, 100 mm/min) gemessen nach DIN 53278, 2 x 90°.

Kochtest: Verklebte Proben wurden nach 4 Tagen Lagerung einem Kochtest in siedendem Wasser unterzogen. Dazu wurden die Proben zunächst zugeschnitten (30 cm x 16 cm) und anschließend so gefaltet, dass die LLDPE-Folie auf sich selbst trifft und die lange Seite des Laminats halbiert wird (15 cm x 16 cm). Die beiden kurzen Seiten (15 cm) werden mit einem Labortischsiegelgerät mit zwei beheizten Siegelbacken über eine Breite von 1 cm bei 150 °C eine Sekunde lang und unter einem Druck von 50 N/cm² versiegelt. Der so hergestellte einseitig offene Beutel wird mit 100 ml Wasser befüllt, und die offene, 16 cm lange Seite ebenfalls in einer Breite von 1 cm wie oben versiegelt. Anschließend wird der geschlossene Beutel 30 Minuten in siedendem Wasser erhitzt.

**Versuche:**

| Versuch | | Schichtgewicht (g/m²) | Erwärmung | Verbundhaftung, 12 Stunden, (N/15 mm) | Verbundhaftung, 7 Tage (N/15 mm) | Siegelnahthaftung (N/15 mm) |
|---|---|---|---|---|---|---|
| 1 | Klebstoff 1, Verfahren 1 | 0,5 | IR | - | 2,5 (Materialriss) | - |
| 2 | Klebstoff 1, Verfahren 2 | 0,5 | Ultraschall | - | 2,7 (Materialriss) | - |
| V 1 | Vergleich, Verfahren 1, kein Klebstoff | 0 | IR | Keine Verbundhaftung | Keine Verbundhaftung | - |
| V 2 | Vergleich, Verfahren 2, kein Klebstoff, | 0 | Ultraschall | Keine Verbundhaftung | Keine Verbundhaftung | - |
| 3 | Klebstoff 2, Verfahren 3 | 0,5 | IR | 2,5 - 3,0 (Materialriss) ^{[b]} | 2,7 (Materialriss) | 52 |
| 4 | Klebstoff 2, Verfahren 3 | 0,2 | IR | 2,5 - 3,0 (Materialriss) ^{[b]} | 2,8 (Materialriss) | 53 |
| V 3 | Vergleich, Verfahren 3, kein Klebstoff | 0 | IR | Keine Verbundhaftung | Keine Verbundhaftung | - |
| 5 | Klebstoff 2, Verfahren 3, LLDPE (weiß pigmentiert) | 0,6 | IR | 4,7 (Materialriss) ^{[b]} | 3,4 (Materialriss) ^{[b]} | - |
| V 5 | Vergleich, Klebstoff 2, Verfahren 3, keine Erwärmung, LLDPE (weiß pigmentiert), | 0,6 | keine Erwärmung | 1,3 (Peel) | 1,8 (Peel) | - |
| 6 | Klebstoff 2, Verfahren 3, PET (bedruckt) ^{[a]} | 0,2 | IR | - | 1,2-1,5 (Peel) | - |
| V 6 | Vergleich, Klebstoff 2, Verfahren 3, keine Erwärmung, PET (bedruckt)^{[a]} | 0,2 | Keine Erwärmung | Keine Haftung | Keine Haftung | - |

| | | | | | | |
|---|---|---|---|---|---|---|
| [a] PET bedruckt mit einer ca. 1 µm dicken Schicht einer blauen Druckfarbe [b] Abriss der PET-Folie | | | | | | |

Die Laminate, bei denen das Substrat 2 einer Wärmebehandlung unterworfen wurde und bei denen beide Folien miteinander verklebt wurden, waren alle optisch einwandfrei (transparent, keine Blasen).
Diese verklebten Folien waren zudem nach Kochen noch fest verklebt ohne Delaminierung. Die Verbundhaftung blieb unverändert (Materialabriss im Peeltest).

Laminate, bei denen Substrat 2 zwar erwärmt, aber auf den Klebstoff verzichtet wurde, zeigten keine Verbundhaftung.

Laminate, bei denen die Folien verklebt, aber Substrat 2 nicht erwärmt wurde, zeigten eine geringe oder keine Verbundhaftung.

Es ließ sich weiterhin beobachten, dass bei Laminaten, die ohne Erwärmung des Substrats 2 hergestellt wurden, optische Mängel auftreten konnten. Diese Mängel traten umso eher auf, je geringer die Auftragsmenge des Klebstoffs war.

## Patentansprüche

1. Verfahren zum Verkleben von zwei Substraten, wobei auf einem ersten Substrat ein Klebstoff mit einem Schichtgewicht unter 2 g/m² aufgetragen wird, dieses Substrat mit dem zweiten folienförmigen Substrat aus einem thermoplastischen Kunststoff zusammengeführt wird, wobei die Oberfläche des zweiten Substrats durch Erwärmen in einen erweichten Zustand überführt wird und die Substrate unmittelbar nach dem Erwärmen durch Druck miteinander verklebt werden, wobei es sich bei dem Klebstoff um einen Klebstoff auf Basis von thermoplastischen Polyurethanen, EVA oder Polyacrylaten handelt.

2. Verfahren nach Anspruch 1, **dadurch gekennzeichnet, dass** das zweite Substrat eine Kunststofffolie mit einem Erweichungspunkt unter 200°C, bestimmt gemäß DIN ISO 11357-3:2011, ist.

3. Verfahren nach einem der Ansprüche 1 oder 2, **dadurch gekennzeichnet, dass** das Erwärmen mit Plasma-, Laserbehandlung, Beflammung, Ultraschall, NIR-Strahlung oder IR-Strahlung durchgeführt wird.

4. Verfahren nach einem der Ansprüche 1 bis 3, **dadurch gekennzeichnet, dass** die Erwärmung auf eine Temperatur im Bereich von +/- 40°C, vorzugsweise + / - 20°C vom Erweichungspunkt des zweiten Substrats durchgeführt wird.

5. Verfahren nach Anspruch 4, **dadurch gekennzeichnet, dass** das erste Substrat bei der Erwärmungstemperatur keine thermoplastische Oberfläche aufweist.

6. Verfahren nach einem der Ansprüche 1 bis 5, **dadurch gekennzeichnet, dass** zwei folienförmige Substrate verklebt werden.

## Claims

1. A method for bonding two substrates, wherein an adhesive having a coating weight of less than 2 g/m² is applied to a first substrate, this substrate is brought together with the second film-like substrate made of a thermoplastic plastics material, wherein the surface of the second substrate is converted to a softened state by heating and the substrates are bonded together using pressure immediately after heating, wherein the adhesive is an adhesive based on thermoplastic polyurethanes, EVA or polyacrylates.

2. The method according to claim 1, **characterized in that** the second substrate is a plastics film having a softening point of less than 200 °C, determined according to DIN ISO 11357-3:2011.

3. The method according to one of claims 1 or 2, **characterized in that** the heating is carried out using plasma treatment, laser treatment, flame treatment, ultrasound, NIR radiation or IR radiation.

4. The method according to one of claims 1 to 3, **characterized in that** the heating is carried out to a temperature in the range of +/- 40 °C, preferably +/- 20 °C from the softening point of the second substrate.

5. The method according to claim 4, **characterized in that** the first substrate does not have a thermoplastic surface at the heating temperature.

6. The method according to one of claims 1 to 5, **characterized in that** two film-like substrates are bonded.

## Revendications

1. Procédé de collage de deux substrats, dans lequel, sur un premier substrat, un adhésif est appliqué avec un poids de revêtement inférieur à 2 g/m², ce substrat est fusionné avec le second substrat en forme de feuille constitué d'une matière thermoplastique, dans lequel la surface du second substrat est transformée, par chauffage, dans un état de ramollissement et les substrats sont collés ensemble par pression immédiatement après le chauffage, dans lequel l'adhésif est un adhésif à base de polyuréthannes thermoplastiques, d'EVA ou de polyacrylates.

2. Procédé selon la revendication 1, **caractérisé en ce que** le second substrat est une feuille plastique ayant un point de ramollissement inférieur à 200 °C, déterminé selon la norme DIN ISO 11357-3:2011.

3. Procédé selon l'une quelconque des revendications 1 ou 2, **caractérisé en ce que** le chauffage est effectué par traitement au plasma, traitement au laser, exposition à la flamme, ultrason, rayonnement NIR ou par rayonnement IR.

4. Procédé selon l'une quelconque des revendications 1 à 3, **caractérisé en ce que** le chauffage est effectué à une température située dans la plage de +/-40 °C, de préférence de +/-20 °C du point de ramollissement du second substrat.

5. Procédé selon la revendication 4, **caractérisé en ce que** le premier substrat ne présente pas de surface thermoplastique à la température de chauffage.

6. Procédé selon l'une quelconque des revendications 1 à 5, **caractérisé en ce que** deux substrats en forme de feuille sont collés.
